# EUROPEAN PATENT APPLICATION

(11) **EP 2 530 453 A1**
(43) Date of publication of application: **05.12.2012**
(21) Application number: 11168145.8
(22) Date of filing: 31.05.2011
(51) Int. Cl.: G01N 21/35, G01J 5/04, G01J 5/34, G01J 5/42, G01N 21/37

(54) **THz-sensor**

(71) Applicant: Belitsky, Victor, 431 51 Mölndal (SE); Desmaris, Vincent Pierre, 415 12 Göteborg (SE); Marouf, Rashid Hawal, 422 54 Hisings Backa (SE)
(72) Inventor: Belitsky, Victor, 431 51 Mölndal (SE); Desmaris, Vincent Pierre, 415 12 Göteborg (SE); Marouf, Rashid Hawal, 422 54 Hisings Backa (SE)
(74) Representative: Fritsche, Daniel

(57) **Abstract**

A sensor (100) for sensing electromagnetic radiation in the THz-range, comprising an electrically conducting base wall (102); a tubular electromagnetic waveguide (104) extending from the electrically conducting base wall (102); a first membrane (106) spaced apart from the base wall (102); and a second membrane (108) arranged between the base wall (102) and the first membrane to form a cavity defined by the first membrane (106), the second membrane (108) and the tubular electromagnetic waveguide (104). Absorption of the electromagnetic radiation at at least one of the first and second membranes causes thermal expansion of gas inside the cavity resulting in deflection of at least one of the first and second membranes. The tubular electromagnetic waveguide (104) extends beyond the first membrane (106) so as to reduce the amplitude of any external pressure oscillations such as acoustic waves entering the waveguide before the pressure oscillations reach the first membrane.

## Description

### Field of the Invention

The present invention relates to a sensor for detecting THz radiation, a THz radiation detection system comprising said sensor and to a readout method for the THz radiation detection system.

### Technical Background

Terahertz (THz) radiation, loosely defined as radiation in the 0,1 ― 10 THz range, and corresponding THz sensors is increasingly used for various applications. The THz range is sometimes taken to include the far infrared (IR) wavelengths for which there are already a large number of applications using IR sensors in areas such as communication and thermal motion detection.

There is also an interest in using THz sources and sensors in medical applications, as THz radiation, contrary to X-rays, is not ionizing and thereby not damaging to tissue and DNA. Therefore, THz imaging may be a suitable replacement for X-rays in a number of different applications.

THz imaging is also interesting for security applications as THz penetrates materials such as paper, cardboard, wood, fabric and plastics. Thereby it is possible to detect metal objects which may be hidden under clothing or otherwise concealed.

One way of detecting THz radiation is to use a Golay-cell which traditionally consists of a metallic cylinder sealed in one end by a flexible membrane and by an absorbing material in the other end. The cavity is filled with gas which is heated when THz radiation is absorbed by the absorbing material. As the heated gas expands, the deflection of the flexible membrane can be measured optically, thereby giving a measure of the amount of absorbed radiation. A typical size of the conventional Golay-cell is in the order of several centimeters.

A drawback of the traditional Golay cell is that it has to be made fairly large and as a result, the response time of the sensor is correspondingly slow due the amount of gas that has to be heated before a deflection of the membrane can be detected.

In various applications, it is desirable to have an imaging system for room temperature applications which is both compact, has high resolution and is fast enough to provide real time imaging. Therefore, there is a need for a smaller and faster THz sensor for use in a high resolution THz imaging system.

### Summary of the lnvention

In view of the above-mentioned desired properties of a THz sensor, and the above-mentioned and other drawbacks of the prior art, it is an object of the present invention to provide an improved sensor for sensing radiation in the THz frequency range.

According to a first aspect of the invention, it is therefore provided a sensor for sensing electromagnetic radiation in the THz-range, comprising: an electrically conducting base wall; a tubular electromagnetic waveguide extending from the electrically conducting base wall; a first membrane spaced apart from the base wall; and a second membrane arranged between the base wall and the first membrane to form a cavity defined by the first membrane, the second membrane and the tubular electromagnetic waveguide, wherein absorption of said electromagnetic radiation at at least one of said first and second membranes causes thermal expansion of gas inside the cavity resulting in deflection of at least one of the first and second membranes, and wherein the tubular electromagnetic waveguide extends beyond the first membrane so as to reduce the amplitude of any external pressure oscillations such as acoustic waves entering the waveguide before the pressure oscillations reach the first membrane.

The present invention is based on the realization that a compact high resolution sensor for the THz range may be achieved by using a THz sensor formed by micromachining technologies. The sensor according to the present invention is based on the principle of a Golay cell, but the size of the sensor is reduced and the sensitivity is increased as the noise floor of the sensor is considerably reduced. Through micromachining, a very small cavity defined by two membranes and a tubular electromagnetic waveguide is formed. However, such a sensor may be sensitive to external pressure oscillations such as acoustic waves. Therefore, the present invention is furthermore based on the realization that by extending the tubular electromagnetic waveguide beyond the first membrane, acoustic waves entering the waveguide will be attenuated prior to reaching the first membrane, thereby reducing noise and disturbances in the sensor originating from acoustic waves. Sensors according to the present invention may advantageously be used in imaging devices as they are small and are easily fabricated in large numbers. Thereby a high resolution solution for THz imaging is provided both in that each sensor has a high detection resolution and that the small size of the sensor makes it possible to arrange a large number of sensors in a small area. The sensors also function at room temperature and they are sufficiently fast so as to provide real time imaging.

The tubular electromagnetic waveguide may advantageously be circular having a radius such that the cutoff frequency of the waveguide approximately coincides with the lowest frequency of the desired absorption band. The electrically conducting base wall may for example be a metal plate and the purpose of the base wall is to reflect electromagnetic (EM) waves. In particular, EM-waves should be reflected so that a standing wave pattern is formed in the waveguide. The walls of the cup and the wave guide should be smooth in order to reduce metallic losses in the waveguide. In some embodiments, the cavity defined by the first membrane, the second membrane and the tubular electromagnetic waveguide may be a closed cavity. However, the cavity may also be configured to be not hermetically sealed which may be advantageous in some circumstances when it is desirable to employ pressure equalization schemes or in order to provide a faster relaxation time of the sensor.

According to one embodiment of the invention, the extension of the tubular waveguide beyond the first membrane may advantageously be larger than 80 µm. The attenuation of acoustic waves is exponentially dependent on the extension of the tubular waveguide beyond the first membrane, meaning that a longer extension will increase the attenuation of acoustic waves. However practical considerations may limit the extension as the total size of the sensor is likewise increased. Therefore, depending on the application, a length of the extension providing a satisfactory tradeoff between acoustic wave damping and sensor size may be selected.

In one embodiment of the invention, the distance between base wall and the second membrane may be substantially equal to λ (1/4 + *n*/*2*) where λ is the average wavelength of the electromagnetic radiation to be detected and n is an integer. The standing wave pattern for a wave with the wavelength λ formed in the waveguide will have its' first maximum at λ/4 from the base wall and a subsequent maximum at every,λ/2 from the first maximum. Consequently, as it is desirable to absorb as much of the energy from the electromagnetic wave as possible, it is advantageous to arrange the second membrane at or near a standing wave maximum. If the sensor is configured to detect a wide range of wavelengths, the position of the second membrane may be selected as the average position of the standing wave maxima for the selected range of wavelengths. More specifically, the position of the second membrane may be selected to coincide with the position of the maxima for a portion of the total range of wavelengths. For example, the position of the second membrane may advantageously coincide with the shorter wavelengths from the range of wavelengths to be detected. Analogously, the first membrane may be arranged at a position where a range of the longest wavelengths selected out of the total range of wavelengths to be detected have their standing wave maximum, thereby utilizing absorption also in the first membrane.

In one embodiment of the invention, the first membrane may constitute a first plate and the second membrane may constitute a second plate in a parallel plate capacitor, and wherein deflection of at least one of the first and second membranes results in a measurable change in the capacitance of the parallel plate capacitor. The absorption of THz radiation and thereby a measure of the amount of radiation reaching the sensor may be achieved by detecting the absolute capacitance of or the change in capacitance of the parallel plate capacitor made up of the two membranes.

According to one embodiment of the invention, the first membrane may advantageously be made from a conductive elastic material. Using an elastic material for the first membrane will increase the deflection of the membrane in response to the heating of the gas in the cavity. Thereby, a more sensitive sensor is provided. The top membrane should also be made of a conductive material such that absorption of the electromagnetic waves is achieved but not so conductive that it reflects the incoming electromagnetic waves. The membrane should also be conductive in order to function as one of the plates in a parallel plate capacitor. Materials with appropriate conductivity and elasticity characteristics may for example be based on polymers such as Polydimethylsiloxane (PDMS) or epoxy based SU8.

Analogously, the second membrane should be selected from a material having the desired conductivity and elasticity parameters. lf the main purpose of the second membrane is to absorb electromagnetic waves and not to be elastic, a material with advantageous absorption properties is desirable. One such material may for example be a semiconducting material where the conductivity can be controlled by doping. As the absorption is related to the conductivity of the material, it is possible to select the doping level in a semiconducting material such that the desired absorption properties are achieved.

In an alternative embodiment of the present invention, the first membrane may be coated with a conductive material on the side facing the second membrane. In such a case, the membrane itself may be made from an insulating material.

In one embodiment of the present invention, the inner wall of the tubular electromagnetic waveguide is electrically conductive. In order to achieve the best possible propagation properties of the waveguide, the inner wall should be electrically conductive. The wall should also be smooth so that no attenuation of the propagated electromagnetic wave resulting from metallic losses occurs. An electrically conductive electromagnetic waveguide may advantageously be made from a metal or from a doped semiconductor.

According to one embodiment, the inner wall of the tubular electromagnetic waveguide may advantageously be coated with a thermally insulating material. As the principle of detection of the sensor is based on heating induced by the THz radiation leading to the thermal expansion of gas in a closed cavity, it is important that as much of the generated heat as possible acts so as to heat the gas in the cavity. Therefore, a thermally insulating coating help maintain the heat within the waveguide thereby providing improved sensitivity of the sensor. However, the thermal insulation may equally way be arranged on the outer wall of the waveguide providing the same insulating effect as described above, or the insulation may be arranged on both the inner and outer walls.

According to one embodiment of the invention, it is provided a THz sensing device comprising: a plurality of the aforementioned sensors for sensing THz radiation; readout circuitry connected to each of the sensors for converting the deflection of the first and second membrane to measurement values indicative of the intensity of electromagnetic radiation reaching each of said sensors; and an interface connected to the readout circuitry for allowing external access of the measurement values. It is desirable to combine a plurality of sensors in a device order to detect THz radiation with a high resolution. As the sensors according to the present invention may be made comparatively small, a THz sensing device may be achieved having high resolution while maintaining a reasonable size. Such a THz sensing device may for example be used in a camera. Furthermore, by providing a plurality of sensors in a device, a parallelism may be achieved which reduces the imaging time considerably compared to in a device with a single sensor which much be swept a large number of times in order to generate an image.

In one embodiment of the invention, the readout circuitry may advantageously comprise: a plurality of transmission lines, each being associated with a corresponding one of the sensors in such a way that each transmission line and its corresponding sensor form a resonant circuit with a resonance frequency different from that of the remainder of resonant circuits; a common feed line connected to each of the plurality of resonant circuits; a signal generator for generating signals comprising frequencies at or close to the resonance frequency of each of the plurality of resonant circuits; a multiplexer for forming a common signal comprising the plurality of generated signals; a transmitter for transmitting the common signal on the common feed line; a coupler for coupling, to each resonant circuit, the portion of the signal corresponding to the resonance frequency of said resonant circuit and for coupling, to the common feed line, a reflected signal from each resonant circuit; a receiver for reading, from the common feed line, the reflected signals from the plurality of sensors; and a demultiplexer for detecting the reflected signal from each of the plurality of sensors. Each sensor-transmission line pair form a resonant circuit where the sensor is the capacitive component and the transmission line is the inductive component. In order to uniquely distinguish the response signal from each of the sensors during readout, each resonance circuit has a unique resonance frequency. The capacitor or the inductor, or a combination of the two, may be varied such that all resonant circuits have a unique resonance frequency.

In a sensing device comprising a plurality of sensors, it is advantageous to be able to read out the response from the sensors using a parallel readout scheme. A parallel readout scheme may be achieved by using a signal comprising frequencies corresponding to the resonance frequencies of all of the resonant circuits. The signal is transmitted on the common feed line to the plurality of sensors and the corresponding response signal is received by the receiving circuitry. The response signal comprises all the frequencies corresponding to the reflected frequencies from the resonant circuits and by demultiplexing the signal, the reflected signal from each of the sensors can be identified. Thereby, a parallel readout scheme is achieved.

According to one embodiment of the invention, the plurality of sensors may advantageously be arranged in an array.

In one embodiment of the present invention, at least one of the first and second membrane of the sensor may be electrically connected to the readout circuitry by transmission line circuitry configured to allow propagation of a readout signal while preventing propagation of electromagnetic radiation in the THz-range present in the tubular waveguide. As the capacitance of the sensor is read by electrically contacting at least one of the membranes, an electrical connection exists between the inside and the outside of the sensor. The electrical connection may for example be achieved by forming an electrically conducting path through the wall of the tubular waveguide. However, electromagnetic waves in the THz range leaking from the inside of the sensor to the readout circuitry may disturb the readout. Furthermore, leakage of electromagnetic waves from the inside of the sensor may also result in reduced sensitivity as power losses result in reduced heating of the gas in the cavity. Therefore, in order to prevent electromagnetic waves in the sensor from leaking into the readout circuitry, the transmission line circuitry is configured as a low-pass or band-pass filter allowing the lower frequency readout signal to propagate on the transmission line while preventing the higher frequency THz-waves from leaving the tubular waveguide. The filter portion of the transmission line circuitry may also be referred to as a "THz choke" structure. The transmission line may be any sort of transmission line such as a wire, microstrip, stripline, waveguide or the like.

In one embodiment of the invention, each transmission line may be configured to have an inductance different from that of the remainder of transmission lines. Tuning the inductance of the different transmission lines is a straightforward way of achieving different resonance frequencies for the different resonant circuits. However, different resonance frequencies for each or the resonant circuits may equally well be achieved by tuning the capacitance of the sensor, by changing the properties of the transmission line circuitry or by introducing additional components. Furthermore, the aforementioned THZ-choke may be a part of the transmission line. In such a case, the combined transmission line and THz-choke inductance may be tuned to achieve the desired resonance characteristics of the resonant circuit.

According to a second aspect of the present invention, it is provided a method for readout from a THz sensing device comprising a plurality of sensors for sensing electromagnetic radiation in the THz-range, each sensor comprising: an electrically conducting base wall; a tubular electromagnetic waveguide extending from the electrically conducting base wall; a first membrane spaced apart from the base wall; and a second membrane arranged between the base wall and the first membrane to form a cavity defined by the first membrane, the second membrane and the tubular electromagnetic waveguide, wherein absorption of said electromagnetic radiation at at least one of said first and second membranes causes thermal expansion of gas inside the cavity resulting in deflection of at least one of the first and second membranes; and readout circuitry comprising: a plurality of transmission lines, each being associated with a corresponding one of said sensors in such a way that each transmission line and its corresponding sensor forms a resonant circuit with a resonance frequency different from that of the remainder of resonant circuits; a common feed line connected to each of the plurality of resonant circuits, the method comprising the steps of: generating a plurality of frequencies at or near the resonance frequency of each of the plurality of resonant circuits; forming a signal comprising the generated plurality of frequencies; transmitting the signal on the common feed line; coupling, to each resonant circuit, the portion of the signal corresponding to the resonance frequency of said resonant circuit; coupling, to the common feed line, a reflected signal from each resonant circuit; receiving, from the common feed line, a signal comprising the reflected signals from each of the plurality of resonant circuits; detecting the reflected signal from each of the resonant circuits; and for each of the resonant circuits, determining the relation between the detected reflected signal and a reference signal.

In one embodiment of the invention, the reference signal is a signal reflected from the resonant circuit under known conditions. Known conditions may for example be when no THz radiation is incident on the sensor, thereby giving the inherent response signal of the resonant circuit. The inherent response signal of the resonant circuit is the response signal measured when no THz radiation is influencing the sensor. This inherent response signal may then be used as a reference signal to which the measured signal is compared. The difference between the reference and measured signal or each of the sensors may then be used to derive the amount of THz radiation absorbed by each sensor. However, other known conditions may also be used as a reference signal such as a predetermined amount of incoming radiation. Alternatively, a zero signal may be used as the reference signal. Furthermore, several different parameters may be studied such as the difference in phase, frequency or amplitude. In particular, an accurate measure may be achieved by studying the difference in phase between the received signal and reference signal at or near the resonance frequency of each resonant circuit.

Further effects and features of this second aspect of the present invention are largely analogous to those described above in connection with the first aspect of the invention.

### Brief Description of the Drawings

These and other aspects of the present invention will now be described in more detail with reference to the appended drawings showing a currently preferred embodiment of the invention, wherein:
Fig. 1 schematically illustrates a sensor according to an embodiment of the invention;
Fig. 2 schematically illustrates a THz sensing device according to an embodiment of the invention; and
Fig. 3 is a flowchart schematically illustrating an example embodiment of the method according to the present invention.

### Detailed Description

In the present detailed description, various embodiments of a sensor according to the present invention are mainly discussed with reference to a sensing device for sensing electromagnetic radiation in the THz-range and to a method for reading out information from the sensing device. This invention may however be embodied in many different forms and should not be construed as limited to the embodiments set forth herein; rather, these embodiments are provided for thoroughness and completeness, and fully convey the scope of the invention to the skilled person. Like reference characters refer to like elements throughout. It should be noted that dimensions and material choices for the sensor may vary depending on the desired properties of the sensor in a specific application. The sensor may for example be optimized with respect to, size, sensitivity, a certain frequency range, environmental parameters etc. Such variations may be achieved within the general scope of the invention. In the following, a detailed example of a sensor and a readout system configured to detect frequencies between 0.5 and 5 THz will be given.

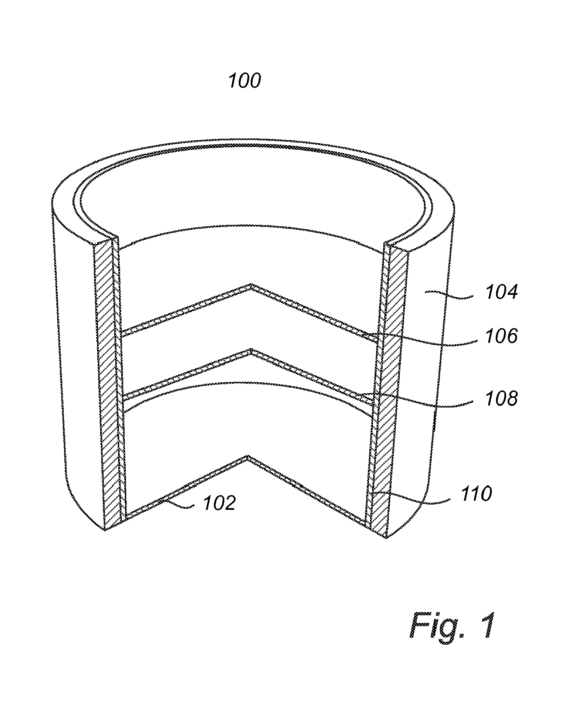

Fig 1 schematically illustrates a sensor 100 according to an embodiment of the present invention. The sensor 100 comprises an electrically conducting base wall 102, a cylindrical electromagnetic waveguide 104 extending from the base wall 102, a first membrane 106 and a second membrane 108. The inner radius of the electromagnetic waveguide 104 is 200 µm and the waveguide is made from copper using conventional micromachining methods known to the person skilled in the art. The extension of the waveguide beyond the first membrane is at least 80 µm to ensure sufficient damping of acoustic waves. The distance from the base wall 102 to the first membrane 106 is approximately 70 µm and the distance from the base wall 102 to the second membrane 108 is approximately 50 µm, thereby forming a cavity between the first and second membranes. The position of the first membrane 106 from the base wall 102 is based on the average of the quarter-wavelengths of the lowest frequencies, i.e the longest wavelengths, in the desired detection range. The lowest frequencies may span a few hundreds of GHz, here 500-800 GHz. The first membrane 106 is based on a flexible material such as PDMS or SU8, the second membrane 108 is made from doped silicon and the thickness of both the first and second membrane is 5 µm. The specific composition of each of the membranes is selected so as to achieve the desired conductivity and Young's modulus. The position and thickness of the second membrane 108 is calculated from the base wall 102 based on a set of averaged wavelengths from the remainder of the frequencies in the selected detection range. The first and second membranes should be conductive in order to act as the plates in a parallel plate capacitor, thereby providing the readout method for the sensor. As the incoming radiation heats the membranes, thereby heating the gas in the cavity, the gas expands and since the walls of the waveguide are rigid the distance between the membranes changes. In the present example, it is primarily the flexible first membrane 106 which is affected by the expansion of gas. As the position of the first membrane 106 is changed, the capacitance or change in capacitance can be measured and from that measurement it is possible to derive the amount of incoming radiation. Each of the two membranes are electrically connected to the readout circuitry by a conductive path such as a transmission line through the waveguide wall. At least the first membrane 106 is connected to a THz-choke structure having the function of a low-pass or a band-pass filter allowing the readout signal having a lower frequency, on the order of GHz, to propagate on the transmission line while blocking the higher frequency THz-signal in the waveguide. The design of a low-pass or band-pass filter arrangement according to the aforementioned is well known to the person skilled in the art. The second membrane 108 is connected to the readout circuitry either through a THz-choke structure or to common ground.

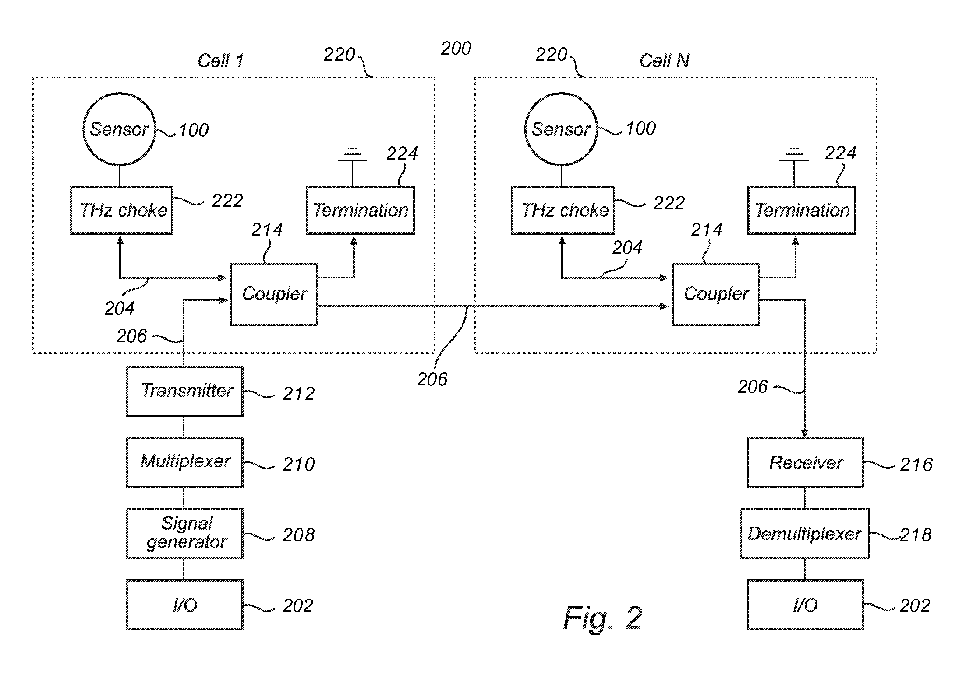

Fig.2 schematically illustrates a currently preferred embodiment of the invention wherein a plurality of sensors 100 arranged in an array together with readout circuitry form a THz sensing device 200. An input/output (I/O) unit 202 enables a digital and/or analog connection of the sensing device 200 to a control unit. The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. A signal generator 208 is used to generate the signals of different frequencies corresponding to the resonance frequencies of the resonant circuits. Next, a multiplexer 210 form a multiplexed signal from the different signals received from the signal generator 208. The multiplexed signal is propagated on the common feed line 206 by the transmitter 212. As is further illustrated in the schematic circuit layout in Fig. 2, each sensor 100 and THz-choke structure 222 is connected to a coupler 214 via an inductive transmission line 204 thereby forming a sensor cell 220. Each sensor 100, THz-choke 222 and transmission line 204 form a resonant LC-circuit having a predetermined resonance frequency where the sensor 100 represents the capacitive portion and the transmission line 204 in combination with the THz-choke 222 represents the inductive portion of the resonant circuit. Each resonant circuit is tuned to have a unique resonance frequency within the array of sensor cells. In the present embodiment all the sensors are identical having the same capacitance and the inductance of the transmission line 204 is tuned to achieve a unique resonant frequency.

The role of the coupler 214 is to filter out a portion of the signal comprising the resonance frequency for a given resonant circuit in a sensor cell 220 and to send that portion of the incoming signal from the common feed line 206 to the resonant circuit via the inductive transmission line 204. The remaining portion of the signal is passing through the coupler 214 unaffected and is thereby further propagated on the common feed line 206. In the next sensor cell, another frequency is filtered out and so on in each sensor cell until the signal has propagated via the common feed line 206 to all sensor cells in the array. The filtered portion of the signal of selected frequency for each sensor cell interacts with the resonating circuit and part of the signal is reflected back to the coupler 214. Depending on the amount of incoming THz-radiation reaching the sensor 100, the capacitance of the sensor may be altered according the abovementioned principles, thereby resulting in a change in resonance frequency of the resonant circuit compared to an inherent resonance behavior when no THz radiation reaches the sensor. The properties of the coupler 214 are such that the reflected signal received by the coupler is later sent to the common feed line 206 where it will continue to propagate unaltered by the subsequent couplers in the remainder of the sensor cells. When the signal propagating on the common feed line has reached the final cell in the array, the resulting signal will have properties of the reflected signals from each sensor cell. The resulting signal is received by the receiver 216 and further passed on to a demultiplexer 218. In the demultiplexer 218, the received signal is divided into different frequency components corresponding to the resonance frequencies of the different resonant circuits. The resulting signals are forwarded via the I/O 202 to a control unit for further analysis. By knowing which sensor cell corresponds to which resonance frequency, the reflected signal from each sensor can be derived and thereby a measure of the detected THz-radiation can be derived.

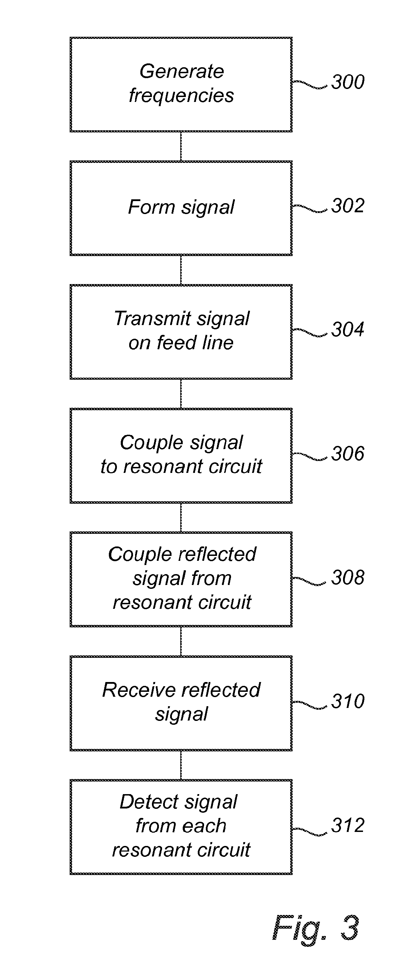

Fig. 3 is a flow chart outlining a readout method according to an embodiment of the invention. In a first step 300, frequencies corresponding to the resonance frequencies of all the resonant circuits in the sensor cell array are generated. Next, 302, a signal containing the generated frequencies is formed. As the signal has been formed, the next step 304 is to transmit the signal on the feed line. For each sensor cell, the portion of the signal corresponding to the resonance frequency of the resonant circuit is coupled, 306, by the coupler to the resonant circuit. In the next step 308, the reflected signal from each of the sensors is coupled to the feed line by the coupler. In the next step 310, a signal containing the reflected signals from all of the sensors in the array is received. By separating the different frequencies in the following step 312, the reflected signal from each of the sensors is detected. Finally, the relation between the reflected signal and a reference signal is derived. By analyzing the resulting phase and/or frequency characteristics, it is possible to derive the change in capacitance or the absolute capacitance of the sensor. Thereby, by knowing the relationship between incoming radiation, heating of the gas in the cavity, the subsequent deflection of the membrane and the change in capacitance which the deflection gives rise to, a measure of the incoming radiation is provided.

The person skilled in the art realizes that the present invention by no means is limited to the preferred embodiments described above. On the contrary, many modifications and variations are possible within the scope of the appended claims. For example, the sensor may comprise more than two membranes in which case the additional membranes may be adapted to absorb THz radiation of varying frequencies. Thereby a broader range of frequencies may be sensed by the same sensor, or a higher sensitivity may be achieved for a given frequency range. Furthermore, sensors having varying configurations may be used in one and the same array, for example such that different regions of the array are sensitive to different frequencies or that sensors sensitive to different frequencies are alternately arranged thereby providing a more broadband sensing device. Furthermore, it is readily realized by the person skilled in the art that the signal generation and multiplexing may be performed in many different ways while still providing the desired signal to the readout circuitry.

## Claims

1. A sensor (100) for sensing electromagnetic radiation in the THz-range, comprising:
an electrically conducting base wall (102);
a tubular electromagnetic waveguide (104) extending from the electrically conducting base wall (102);
a first membrane (106) spaced apart from the base wall (102); and
a second membrane (108) arranged between the base wall (102) and the first membrane to form a cavity defined by the first membrane (106), the second membrane (108) and the tubular electromagnetic waveguide (104),
wherein absorption of said electromagnetic radiation at at least one of said first and second membranes causes thermal expansion of gas inside the cavity resulting in deflection of at least one of the first and second membranes, and
wherein the tubular electromagnetic waveguide (104) extends beyond the first membrane (106) so as to reduce the amplitude of any external pressure oscillations such as acoustic waves entering the waveguide before said pressure oscillations reach the first membrane.

2. The sensor (100) according to claim 1, wherein the extension of the tubular electromagnetic waveguide (102) beyond the first membrane (106) is greater than 80 µm.

3. The sensor (100) according to claim 1 or 2, wherein the distance between the base wall (102) and the second membrane (108) is substantially equal to λ/*4* + nλ/2 where λ is the average wavelength of the electromagnetic radiation to be detected and n is an integer.

4. The sensor (100) according to any one of the preceding claims,
wherein the first membrane (106) constitutes a first plate and the second membrane (104) constitutes a second plate in a parallel plate capacitor, and
wherein deflection of at least one of said first and second membranes results in a measurable change in the capacitance of the parallel plate capacitor.

5. The sensor (100) according to any one of the preceding claims,
wherein the first membrane (106) is made from a conductive elastic material.

6. The sensor (100) according to any one of the preceding claims,
wherein the first membrane (106) is coated with a conductive material on the side facing the second membrane (108).

7. The sensor (100) according to any one of the preceding claims,
wherein the inner wall of the tubular electromagnetic waveguide is electrically conductive.

8. The sensor (100) according to any one of the preceding claims,
wherein the inner wall of the tubular electromagnetic waveguide (104) is coated with a thermally insulating material (110).

9. A THz sensing device (200) comprising:
a plurality of the sensors (100) according to any one of claims 1 to 8;
readout circuitry connected to each of the sensors for converting the deflection of the first and second membrane to measurement values indicative of the intensity of electromagnetic radiation reaching each of said sensors; and
an interface (202) connected to the readout circuitry for allowing external access of the measurement values.

10. A THz sensing device (200) according to claim 9, wherein said readout circuitry comprises:
a plurality of transmission lines (204), each being associated with a corresponding one of said sensors in such a way that each transmission line (204) and its corresponding sensor (100) form a resonant circuit with a resonance frequency different from that of the remainder of resonant circuits;
a common feed line (206) connected to each of the plurality of resonant circuits;
a signal generator (208) for generating signals comprising frequencies at or close to the resonance frequency of each of the plurality of resonant circuits;
a multiplexer (210) for forming a common signal comprising the plurality of generated signals;
a transmitter (212) for transmitting the common signal on the common feed line;
a coupler (214) for coupling, to each resonant circuit, the portion of the signal corresponding to the resonance frequency of said resonant circuit and for coupling, to the common feed line, a reflected signal from each resonant circuit;
a receiver (216) for reading, from the common feed line (206), the reflected signals from the plurality of sensors; and
a demultiplexer (218) for detecting the reflected signal from each of the plurality of sensors.

11. The THz sensing device (200) according to claim 9 or 10, wherein the plurality of sensors are arranged in an array.

12. The THz sensing device (202) according to any one of claims 9 to 11, wherein at least one of the first and second membrane of the sensor (100) is connected to the readout circuitry by transmission line circuitry configured to allow propagation of a readout signal while preventing propagation of electromagnetic radiation in the THz-range present in the tubular waveguide.

13. The THz sensing device (202) according to any one of claims 9 to 12, wherein each transmission line (204) is configured to have an inductance different from that of the remainder of transmission lines.

14. A method for readout from a THz sensing device comprising a plurality of sensors for sensing electromagnetic radiation in the THz-range, each sensor (100) comprising:
an electrically conducting base wall (102);
a tubular electromagnetic waveguide (104) extending from the electrically conducting base wall (102);
a first membrane (106) spaced apart from the base wall (102); and
a second membrane (108) arranged between the base wall (102) and the first membrane to form a cavity defined by the first membrane (106), the second membrane (108) and the tubular electromagnetic waveguide (104),
wherein absorption of said electromagnetic radiation at at least one of said first and second membranes causes thermal expansion of gas inside the cavity resulting in deflection of at least one of the first and second membranes; and
readout circuitry comprising:
a plurality of transmission lines (204), each being associated with a corresponding one of said sensors in such a way that each transmission line (204) and its corresponding sensor (100) forms a resonant circuit with a resonance frequency different from that of the remainder of resonant circuits; and
a common feed line (206) connected to each of the plurality of resonant circuits;
the method comprising the steps of:
generating (300) a plurality of frequencies at or near the resonance frequency of each of the plurality of resonant circuits;
forming (302) a signal comprising the generated plurality of frequencies;
transmitting (304) the signal on the common feed line (206);
coupling (306), to each resonant circuit, the portion of the signal corresponding to the resonance frequency of said resonant circuit;
coupling (308), to the common feed line (206), a reflected signal from each resonant circuit;
receiving (310), from the common feed line (206), a signal comprising the reflected signals from each of the plurality of resonant circuits;
detecting (312) the reflected signal from each of the resonant circuits;
and
for each of the resonant circuits, determining the relation between the detected reflected signal and a reference signal.

15. The method according to claim 14, wherein the reference signal is a signal reflected from the resonant circuit under known conditions.
